(19) **Europäisches Patentamt** / **European Patent Office** / **Office européen des brevets**

(11) **EP 2 863 200 B1**

(12) # EUROPEAN PATENT SPECIFICATION

(45) Date of publication and mention of the grant of the patent:
**05.07.2017 Bulletin 2017/27**

(51) Int Cl.:
*G01M 11/02* [(2006.01)]  *G01J 4/00* [(2006.01)]
*G01N 21/21* [(2006.01)]  *G01N 21/23* [(2006.01)]
*G01J 9/00* [(2006.01)]

(21) Application number: **12878709.0**

(22) Date of filing: **23.07.2012**

(86) International application number:
**PCT/CN2012/000990**

(87) International publication number:
**WO 2013/185264 (19.12.2013 Gazette 2013/51)**

(54) **DEVICE AND METHOD FOR MEASURING PHASE DELAY DISTRIBUTION AND FAST AXIS AZIMUTH DISTRIBUTION IN REAL TIME**

VORRICHTUNG UND VERFAHREN ZUR MESSUNG EINER PHASENVERSCHIEBUNGSVERTEILUNG UND EINER SCHNELLEN ACHSENAZIMUTHVERTEILUNG IN ECHTZEIT

DISPOSITIF ET PROCÉDÉ DE MESURE DE RÉPARTITION DE RETARD DE PHASE ET RÉPARTITION D'AZIMUT D'AXE RAPIDE EN TEMPS RÉEL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.06.2012 CN 201210199435**

(43) Date of publication of application:
**22.04.2015 Bulletin 2015/17**

(73) Proprietor: **Shanghai Institute of Optics and Fine Mechanics**
**Chinese Academy of Sciences**
**Jiading**
**Shanghai 201800 (CN)**

(72) Inventors:
• **ZENG, Aijun**
  **Shanghai 201800 (CN)**
• **LIU, Longhai**
  **Shanghai 201800 (CN)**
• **ZHU, Linglin**
  **Shanghai 201800 (CN)**
• **HUANG, Huijie**
  **Shanghai 201800 (CN)**

(74) Representative: **Prol European Patent Attorneys**
**Postfach 2123**
**90711 Fürth (DE)**

(56) References cited:
**WO-A1-2010/105757**   **CN-A- 101 076 714**
**CN-A- 101 319 958**   **CN-A- 101 504 329**
**CN-A- 102 175 430**

• PENGQIAN YANG ET AL: "Real-time stress induced birefringence measurements of fibrous materials", CONFERENCE ON LASERS AND ELECTRO-OPTICS, 2009. CLEO-PACIFIC RIM 2009, 2009, pages 1-2, XP031550238, ISBN: 978-1-4244-3829-7
• Z Linglin ET AL: "Real-time measurement method for retardation of eighth waveplate independent of fast axis", Chinese Journal of Lasers, 10 May 2011 (2011-05-10), pages 1-5, XP55234298, China Retrieved from the Internet: URL:http://www.opticsjournal.net/Abstract. htm?id=OJ110428000113Zv2y5B [retrieved on 2015-12-07]
• GAO ZHISHAN AND YAN MING: "An automatic system for measurement of retardation of wave plates based on phase-shifted", SPIE, PO BOX 10 BELLINGHAM WA 98227-0010 USA, vol. 5638, 2005, pages 164-168, XP040196992,

**(Cont. next page)**

- BI Q ET AL: "Inverse symmetric Dammann gratings", OPTICS COMMUNICATIONS, NORTH-HOLLAND PUBLISHING CO. AMSTERDAM, NL, vol. 282, no. 5, 2009, pages 742-747, XP025883130, ISSN: 0030-4018, DOI: 10.1016/J.OPTCOM.2008.11.063 [retrieved on 2008-12-11]
- AIJUN ZENG ET AL: "Simultaneous measurement of retardance and fast axis angle of a quarter-wave plate using one photoelastic modulator", APPLIED OPTICS, OPTICAL SOCIETY OF AMERICA, WASHINGTON, DC; US, vol. 50, no. 22, 2011, pages 4347-4352, XP001564573, ISSN: 0003-6935, DOI: 10.1364/AO.50.004347 [retrieved on 2011-07-22]
- HAN, JIE ET AL.: 'Real-time spatial polarization decoding technology based on two-dimensional grating and analyzer arra' CHINESE JOURNAL OF SCIENTIFIC INSTRUMENT vol. 31, no. 3, March 2011, pages 507 - 511, XP008174242

**Description**

This application relates to polarization measurement, especially one device and method for measuring phase retardation distribution and fast axis azimuth angle distribution of the birefringent component in real time.

**BACKGROUND OF THE INVENTION**

Birefringent component is widely used in many domains, such as polarized illumination system of immersion lithography, phase shifting interferometry and biological optics. The phase retardation and fast axis azimuth angle are two important parameters of birefringent component. The phase retardation distribution and fast axis azimuth angle distribution of the birefringent component must be acquired when it is used in the immersion lithography polarized illumination system and phase shifting interferometry. So it is of essentiality to precisely measure the phase retardation distribution and fast axis azimuth angle distribution of the birefringent component.

The Chinese Laid-Open Patent Application No.200710178950.3 discloses a method and system of precisely measuring the optical phase retardation. By using an optical modulator in the optical setup, the modulated polarized light is generated. After filtering the measurement signals, the measurement of DC zero value is transferred to the measurement of AC zero value. By precisely judging the position of the extreme point, the phase retardation can be measured. But this method cannot measure the fast axis azimuth angle of the sample and the phase retardation distribution in real time.

Tsung-Chih Yu et al. in a paper entitled "Full-field and full-range sequential measurement of the slow axis angle and phase retardation of linear birefringent materials", Applied Optics, Vol. 48, p. 4568(2009), discloses a method of measuring the phase retardation distribution and fast axis azimuth angle distribution of birefringent materials by using heterodyne interferometry method and three-step time-domain phase shifting method. This method needs to change part of the light path to measure the phase retardation distribution and fast axis azimuth angle distribution in step by step and uses the time-domain phase shifting technology, thus it is not feasible for measuring the phase retardation distribution and fast axis azimuth angle distribution in real time. Pengqian Yang et al, "Real-time stress induced birefringence measurements of fibrous materials", CONFERENCE ON LASERS AND ELECTRO-OPTICS, 2009. CLEO-PACIFIC RIM 2009, discloses a device for measuring phase retardation distribution and fast axis azimuth angle distribution in real time. The device comprises a collimating light source, a linear polarizer, a diffractive beam-splitting component, an analyzer array, a CCD image sensor, and a computer equipped with an image acquisition card. In this device a quarter-wave plate, placed between the polarizer and the sample, is combined with the linear polarizer to form an equivalent circular polarizer.

**SUMMARY OF THE INVENTION**

The purpose of this invention is to overcome the shortages of the above technology. One method and device for measuring phase retardation distribution and fast axis azimuth angle distribution in real time is proposed. The measured result is immune to the fluctuation of the initial light intensity and this method has large measuring range.

The technical solution to this invention is according to claims 1 and 7. The device for measuring phase retardation distribution and fast axis azimuth angle distribution in real time of a sample according to claim 1 comprises a collimating light source, a circular polarizer, a diffractive beam-splitting component, a quarter-wave plate, an analyzer array, a CCD image sensor and a computer equipped with an image acquisition card. The analyzer array is composed of a first analyzer, a second analyzer, a third analyzer and a fourth analyzer whose polarization direction successively increases by 45°. The positions of the above components are as follows:

The quarter-wave plate is located in a same path with the first analyzer and the angle between the fast axis of the quarter-wave plate and transmission direction of the first analyzer is 45° or 135°. Light emitted from the collimating light source passes through the circular polarizer and then the diffractive beam-splitting component and is split into four sub-beams by the diffractive beam-splitting component, wherein one of the sub-beams passes through the quarter-wave plate and then is analyzed by the first analyzer, and the other three sub-beams are directly analyzed by the second analyzer, the third analyzer and the fourth analyzer, respectively. An output port of the image sensor is connected to an input port of said computer, and a means for accommodating a measuring sample is arranged between the circular polarizer and the diffractive beam-splitting component.

The collimating light source is a He-Ne laser.

The circular polarizer is made of calcite crystal and quartz crystal, whose extinction ratio is better than $10^{-3}$.

The diffractive beam-splitting component is a Quadrature Amplitude grating, a Quadrature Phase grating or a Dammann grating, which can split the incident beam into four sub beams with the same light intensity.

The quarter wave plate is a zero-order standard quartz wave plate.

The first analyzer, the second analyzer, the third analyzer and the fourth analyzer are all polarizers having extinction ratio better than 10^{-3}.

The method of measuring the phase retardation distribution and fast axis azimuth angle distribution in real time of a sample (3) according to claim 7, using the device of claim 1, comprises the following steps:

① inserting a measuring sample into the means for accommodating the sample, adjusting the light beam so that it perpendicularly passes through the measuring sample.

② turning on the collimating light source, the CCD image sensor and the computer, the CCD image sensor receiving an image formed by said four sub-beams and then transmitting it to the computer, the computer dividing the image into four sub-images and pixelating the four sub-images using same pixelation method and establishing a same coordinate system, respectively, the computer further matrixing the measuring sample and establishing a coordinate system which is the same as that of the sub-image, wherein the intensity values in the four sub-images corresponding to the measured matrix unit (x, y) of the measuring sample are $I_1(x, y)$, $I_2(x, y)$, $I_3(x, y)$ and $I_4(x, y)$, by calculating the intensity values, the phase retardation and fast axis azimuth angle of the matrix unit (x, y) of the measuring sample are obtained. So the phase retardation distribution and the fast axis azimuth angle distribution of the measuring sample can be obtained by processing the four sub-images.

The computer processing the sub-images contains the following steps:

when the polarization direction of the first analyzer is 45° relative to the fast axis of the quarter wave plate, the computer performs the steps ③, ④ below:

③ The computer processing the intensity values $I_1(x, y)$, $I_2(x, y)$, $I_3(x, y)$ and $I_4(x, y)$ corresponding to the matrix unit (x, y) as follows:

$$V_1(x, y) = \sin(\delta(x, y))\sin(2\theta(x, y)) = \frac{2I_1(x, y)}{I_1(x, y) + I_3(x, y)} - 1,$$

$$V_2(x, y) = \sin(\delta(x, y))\cos(2\theta(x, y)) = \frac{2I_4(x, y)}{I_1(x, y) + I_3(x, y)} - 1,$$

$$V_3(x, y) = \cos(\delta(x, y)) = 1 - \frac{2I_2(x, y)}{I_1(x, y) + I_3(x, y)},$$

wherein $\delta(x, y)$ is the retardation of said matrix unit (x, y), and $\theta(x, y)$ is the fast axis azimuth angle of said matrix unit (x, y), then calculating the retardation $\delta(x, y)$ in the range of 0°~180° as follows:

when $\sqrt{V_1^2(x, y) + V_2^2(x, y)} \leq V_3(x, y)$, the $\delta(x, y) = \arcsin(\sqrt{V_1^2(x, y) + V_2^2(x, y)})$,

when $\sqrt{V_1^2(x, y) + V_2^2(x, y)} > |V_3(x, y)|$, the $\delta(x, y) = \arccos(V_3(x, y))$,

when $\sqrt{V_1^2(x, y) + V_2^2(x, y)} < -V_3(x, y)$, the $\delta(x, y) = 180° - \arcsin(\sqrt{V_1^2(x, y) + V_2^2(x, y)})$,

calculating the fast axis azimuth angle $\theta(x, y)$ can be calculated in the range of -90'-90° as follows:

when $V_2(x, y) < 0$ & $V_1(x, y) \leq 0$, the $\theta(x, y) = \frac{1}{2}\arctan(\frac{V_1(x, y)}{V_2(x, y)}) - 90°$,

when $V_2(x, y) > 0$, the $\theta(x, y) = \frac{1}{2}\arctan(\frac{V_1(x, y)}{V_2(x, y)})$,

when $V_2(x, y) < 0$ & $V_1(x, y) > 0$, the $\theta(x, y) = \frac{1}{2}\arctan(\frac{V_1(x, y)}{V_2(x, y)}) + 90°$,

④ sequentially changing the coordinate values x and y of said matrix unit (x, y) and its corresponding intensity values $I_1(x, y)$, $I_2(x, y)$, $I_3(x, y)$ and $I_4(x, y)$ and then repeating step ③ until the entire matrix units of the measuring sample are calculated, to thus obtain its phase retardation distribution and the fast axis azimuth angle distribution.

When the polarization direction of said first analyzer is 135° relative to the fast axis azimuth angle of said quarter wave plate, said computer performs the steps ⑤, ⑥ below:

⑤ The computer processing the intensity values $I_1(x, y)$, $I_2(x, y)$, $I_3(x, y)$ and $I_4(x, y)$ corresponding to said matrix unit (x, y) as follows:

$$V_1(x, y) = \sin(\delta(x, y))\sin(2\theta(x, y)) = \frac{2I_2(x, y)}{I_2(x, y) + I_4(x, y)} - 1,$$

$$V_2(x, y) = \sin(\delta(x, y))\cos(2\theta(x, y)) = 1 - \frac{2I_3(x, y)}{I_2(x, y) + I_4(x, y)},$$

$$V_3(x, y) = \cos(\delta(x, y)) = \frac{2I_1(x, y)}{I_2(x, y) + I_4(x, y)} - 1,$$

then calculating the retardation $\delta(x, y)$ in the range of 0° ~180° as follows:

when $\sqrt{V_1^2(x, y) + V_2^2(x, y)} \leq V_3(x, y)$, the $\delta(x, y) = \arcsin(\sqrt{V_1^2(x, y) + V_2^2(x, y)})$,

when $\sqrt{V_1^2(x, y) + V_2^2(x, y)} > |V_3(x, y)|$, the $\delta(x, y) = \arccos(V_3(x, y))$,

when $\sqrt{V_1^2(x, y) + V_2^2(x, y)} < -V_3(x, y)$, the $\delta(x, y) = 180° - \arcsin(\sqrt{V_1^2(x, y) + V_2^2(x, y)})$,

calculating the fast axis azimuth angle $\theta(x, y)$ in the range of -90°~90° as follows:

when $V_2(x, y) < 0$ & $V_1(x, y) \leq 0$, the $\theta(x, y) = \frac{1}{2}\arctan(\frac{V_1(x, y)}{V_2(x, y)}) - 90°$,

when $V_2(x, y) > 0$, the $\theta(x, y) = \frac{1}{2}\arctan(\frac{V_1(x, y)}{V_2(x, y)})$,

when $V_2(x, y) < 0$ & $V_1(x, y) > 0$, the $\theta(x, y) = \frac{1}{2}\arctan(\frac{V_1(x, y)}{V_2(x, y)}) + 90°$,

⑥ sequentially changing the coordinate values x and y of said matrix unit (x, y) and its corresponding intensity values $I_1(x, y)$, $I_2(x, y)$, $I_3(x, y)$ and $I_4(x, y)$ and then repeating step ⑤ until the entire matrix units of the measuring sample are calculated, to thus obtain its phase retardation distribution and the fast axis azimuth angle distribution.

Comparing with the previous technology, the technical effect of this invention contains:

1. This invention can measure the phase retardation distribution and fast axis azimuth angle distribution in real time. The light intensity distributions of the four sub-beams are the functions of the phase retardation distribution and fast axis azimuth angle distribution of the measuring sample. The four sub-beams are simultaneously detected by the CCD image sensor and processed at high speed by the computer, thus the phase retardation distribution and fast axis azimuth angle distribution can be obtained in real time.

2. Fluctuation of the initial light intensity will not affect the measured results. The initial light intensity is eliminated during calculation, thus the measured phase retardation distribution and fast axis azimuth angle distribution of the measuring sample is immune to the initial light intensity.

3. The phase retardation and fast axis azimuth angle are of wide measurement range. Using the intensity values of the four sub-beams, the sine and cosine function of the phase retardation and fast axis azimuth angle can be calculated. Utilizing these two functions, the phase retardation can be precisely calculated in the range of 0°~180° and the fast axis azimuth angle can be precisely calculated in the range of -90°~90°.

**BRIEF DESCRIPTION OF THE DRAWINGS**

FIG. 1 illustrates the diagram to measure the phase retardation distribution and the fast axis azimuth angle distribution in real time.

FIG. 2 illustrates the diagram of the analyzer array.

**DETAILED DESCRIPTION OF THE PREFERRED EMBODIMENTS**

**Example 1**

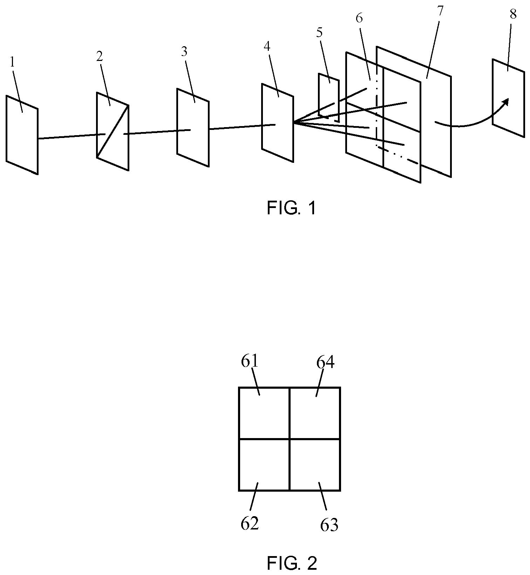

The diagram of measuring phase retardation distribution and fast axis azimuth angle distribution in real time is illustrated in FIG. 1. The device for measuring phase retardation distribution and fast axis azimuth angle distribution in real time comprises a collimating light source 1, a circular polarizer 2, a diffractive beam-splitting component 4, a quarter wave plate 5, an analyzer array 6, a CCD image sensor 7 and a computer 8. Light emitted from the collimating light source 1 successively passes through the circular polarizer 2 and then the diffractive beam-splitting component 4 and is split into four sub-beams by the diffractive beam-splitting component (4). One of the sub-beams passes through the quarter wave plate 5 and is then analyzed by one analyzer of the analyzer array 6, while the other three sub-beams are directly analyzed by the other three analyzers of the analyzer array 6 without passing through the quarter wave plate 5. The CCD image sensor 7 is connected to the computer 8 through electronics. A means for accommodating the measuring sample 3 is arranged between the circular polarizer 2 and the diffractive beam-splitting component 4.

The collimating light source 1 is a He-Ne laser.

The circular polarizer 2 is made of calcite crystal and quartz crystal, whose extinction ratio is better than $10^{-3}$.

The diffractive beam-splitting component 4 is a Dammann Grating which can split the incident beam into four plus or minus one-order sub-beams with the same light intensity.

The quarter wave plate 5 is a zero-order standard quartz quarter wave plate, which is located in one sub-beam's path generated by the diffractive beam-splitting component 4.

The diagram of the analyzer array 6 is illustrated in FIG. 2. It is composed of a first analyzer 61, a second analyzer 62, a third analyzer 63 and a fourth analyzer 64. Their extinction ratios are all better than $10^{-3}$. The quarter wave plate 5 is located in the same path as the first analyzer 61. The polarization directions of the first analyzer 61, the second analyzer 62, the third analyzer 63 and the fourth analyzer 64 are respectively 45°, 90°, 135° and 0° relative to fast axis of the quarter wave plate 5.

The computer 8 is a computer equipped with an image acquisition card.

The method of measuring phase retardation distribution and fast axis azimuth angle distribution in real time of a sample, using the device of claim 1, comprises the following steps:

① inserting the measuring sample 3 into the means for accommodating the sample between the circular polarizer 2 and the diffractive beam-splitting component 4, adjusting the beam so that it perpendicularly passes through the measuring sample 3;

② turning on the collimating light source 1, the CCD image sensor 7 and the computer 8, the CCD image sensor 7 receiving an image formed by the four sub-beams and then transmitting it to the computer 8, the computer 8 dividing the image into four sub-images, and pixelating the four sub-images and establishing a same coordinate system, respectively, the computer further matrixing the measuring sample 3 and establishing a coordinate system which is the same as that of the sub-image, wherein the intensity values in the four sub-images corresponding to the measured matrix unit (x, y) of the measuring sample are $I_1(x, y)$, $I_2(x, y)$, $I_3(x, y)$ and $I_4(x, y)$;

③ The computer 8 processes the intensity values $I_1(x, y)$, $I_2(x, y)$, $I_3(x, y)$ and $I_4(x, y)$ corresponding to the matrix unit (x, y) of the measuring sample 3 as follows:

$$V_1(x,y) = \sin(\delta(x,y))\sin(2\theta(x,y)) = \frac{2I_1(x,y)}{I_1(x,y) + I_3(x,y)} - 1,$$

$$V_2(x,y) = \sin(\delta(x,y))\cos(2\theta(x,y)) = \frac{2I_4(x,y)}{I_1(x,y) + I_3(x,y)} - 1,$$

$$V_3(x,y) = \cos(\delta(x,y)) = 1 - \frac{2I_2(x,y)}{I_1(x,y) + I_3(x,y)},$$

calculating the retardation δ(x, y) of the matrix unit (x, y) in the range of 0°~180°as follows:

when $\sqrt{V_1^2(x,y) + V_2^2(x,y)} \leq V_3(x,y)$, the $\delta(x,y) = \arcsin(\sqrt{V_1^2(x,y) + V_2^2(x,y)})$,

when $\sqrt{V_1^2(x,y) + V_2^2(x,y)} > |V_3(x,y)|$, the $\delta(x,y) = \arccos(V_3(x,y))$,

when $\sqrt{V_1^2(x,y) + V_2^2(x,y)} < -V_3(x,y)$, the $\delta(x,y) = 180° - \arcsin(\sqrt{V_1^2(x,y) + V_2^2(x,y)})$,

calculating the fast axis azimuth angle θ(x, y) of the matrix unit (x, y) in the range of -90°~90°as follows:

when $V_2(x, y) < 0$ & $V_1(x, y) \leq 0$, the $\theta(x,y) = \frac{1}{2}\arctan(\frac{V_1(x,y)}{V_2(x,y)}) - 90°$,

when $V_2(x, y) > 0$, the $\theta(x,y) = \frac{1}{2}\arctan(\frac{V_1(x,y)}{V_2(x,y)})$,

when $V_2(x, y) < 0$ & $V_1(x, y) > 0$, the $\theta(x,y) = \frac{1}{2}\arctan(\frac{V_1(x,y)}{V_2(x,y)}) + 90°$,

④ sequentially changing the coordinate values x and y of the matrix unit (x, y) and its corresponding intensity values $I_1(x, y)$, $I_2(x, y)$, $I_3(x, y)$ and $I_4(x, y)$ and then repeating step ③ until the entire matrix units of the measuring sample 3 are calculated, to thus obtain its phase retardation distribution and the fast axis azimuth angle distribution.

The principle in detail of this invention is explained as follows:

The Jones Vector E of the circularly polarized light emitted from the circular polarizer can be expressed as

$$E = \frac{E_0}{\sqrt{2}}\begin{bmatrix} 1 \\ i \end{bmatrix}, \qquad\qquad (1)$$

wherein $E_0$ is the amplitude of the circularly polarized light.

The Jones Matrix $J_S$ of the matrix unit (x, y) of the measuring sample 3 can be expressed as

$$J_s = \begin{bmatrix} \cos\frac{\delta(x,y)}{2} - i\sin\frac{\delta(x,y)}{2}\cos 2\theta(x,y) & -i\sin\frac{\delta(x,y)}{2}\sin 2\theta(x,y) \\ -i\sin\frac{\delta(x,y)}{2}\sin 2\theta(x,y) & \cos\frac{\delta(x,y)}{2} + i\sin\frac{\delta(x,y)}{2}\cos 2\theta(x,y) \end{bmatrix}, \qquad (2)$$

wherein δ(x, y) and θ(x, y) are respectively the phase retardation and the fast axis azimuth angle of the matrix unit (x, y) of the measuring sample 3. The Jones Matrixes $J_P$ of the first analyzer 61, the second analyzer 62, the third analyzer 63 and the forth analyzer 64 all can be expressed as

$$J_P = \begin{bmatrix} \cos^2\alpha & \sin\alpha\cos\alpha \\ \sin\alpha\cos\alpha & \sin^2\alpha \end{bmatrix}, \qquad\qquad (3)$$

wherein α is the polarization direction angles of the analyzers. The Jones Matrix $J_Q$ of the quarter wave plate 5 can be expressed as

$$J_Q = \begin{bmatrix} 1 & 0 \\ 0 & i \end{bmatrix}. \qquad\qquad (4)$$

After directly analyzed by the second analyzer 62, the third analyzer 63 and the fourth analyzer 64 without passing through the quarter wave plate 5, the Jones Vectors $E_1(x, y)$ of three sub-beams all can be expressed as

$$\mathrm{E}_1(x, y) = \mathrm{J}_P \mathrm{J}_S \mathrm{E}. \qquad\qquad (5)$$

After passing through the quarter wave plate 5 and then analyzed by the first analyzer 61, the Jones Matrix $E_2(x, y)$ of one sub-beam can be expressed as

$$\mathrm{E}_2(x, y) = \mathrm{J}_P \mathrm{J}_Q \mathrm{J}_S E. \qquad\qquad (6)$$

When the Jones Matrix $E_1(x, y)$ or $E_2(x, y)$ is multiplied by its conjugate transposed matrix, the intensity values $I_1(x, y)$, $I_2(x, y)$, $I_3(x, y)$, $I_4(x, y)$ of the four sub-beams corresponding to the matrix unit (x, y) of the sample 3 can be expressed as

$$I_1(x, y) = I_0(1 - \cos(\delta(x, y))), \qquad\qquad (7)$$

$$I_2(x, y) = I_0(1 - \sin(\delta(x, y))\sin(2\theta(x, y))), \qquad\qquad (8)$$

$$I_3(x, y) = I_0(1 + \sin(\delta(x, y))\cos(2\theta(x, y))), \qquad\qquad (9)$$

$$I_4(x, y) = I_0(1 + \sin(\delta(x, y))\sin(2\theta(x, y))). \qquad\qquad (10)$$

From equations (7)~(10), it can be deduced that

$$V_1(x, y) = \sin(\delta(x, y))\sin(2\theta(x, y)) = \frac{2I_4(x, y)}{I_2(x, y) + I_4(x, y)} - 1, \qquad\qquad (11)$$

$$V_2(x, y) = \sin(\delta(x, y))\cos(2\theta(x, y)) = \frac{2I_3(x, y)}{I_2(x, y) + I_4(x, y)} - 1, \qquad\qquad (12)$$

$$V_3(x, y) = \cos(\delta(x, y)) = 1 - \frac{2I_1(x, y)}{I_2(x, y) + I_4(x, y)}. \qquad\qquad (13)$$

Then when $\sqrt{V_1^2(x, y) + V_2^2(x, y)} \leq V_3(x, y)$, the

$$\delta(x, y) = \arcsin(\sqrt{V_1^2(x, y) + V_2^2(x, y)}), \qquad\qquad (14)$$

when $\sqrt{V_1^2(x, y) + V_2^2(x, y)} > |V_3(x, y)|$, the

$$\delta(x, y) = \arccos(V_3(x, y)), \tag{15}$$

when $\sqrt{V_1^2(x, y) + V_2^2(x, y)} < -V_3(x, y)$, the

$$\delta(x, y) = 180° - \arcsin(\sqrt{V_1^2(x, y) + V_2^2(x, y)}). \tag{16}$$

When $V_2(x, y) < 0$ & $V_1(x, y) \leq 0$, the

$$\theta(x, y) = \frac{1}{2} \arctan(\frac{V_1(x, y)}{V_2(x, y)}) - 90°, \tag{17}$$

when $V_2(x, y) > 0$, the

$$\theta(x, y) = \frac{1}{2} \arctan(\frac{V_1(x, y)}{V_2(x, y)}), \tag{18}$$

when $V_2(x, y) < 0$ & $V_1(x, y) > 0$, the

$$\theta(x, y) = \frac{1}{2} \arctan(\frac{V_1(x, y)}{V_2(x, y)}) + 90°. \tag{19}$$

By using equations (14)~(19), the $\delta(x, y)$ distribution can be measured in the range of 0°~180° and $\theta(x, y)$ distribution can be measured in the range of -90°~90°.

## Example 2

The difference between embodiment 2 and embodiment 1 is that the polarization directions of the first analyzer 61, the second analyzer 62, the third analyzer 63 and the fourth analyzer 64 are 135°, 0°, 45° and 90° relative to fast axis of the quarter wave plate 5. And the corresponding data processing steps are also different, they contain below:

③ the computer 8 processing the intensity values $I_1(x, y)$, $I_2(x, y)$, $I_3(x, y)$ and $I_4(x, y)$ corresponding to the matrix unit (x, y) of the measuring sample 3 as follows:

$$V_1(x, y) = \sin(\delta(x, y))\sin(2\theta(x, y)) = \frac{2I_2(x, y)}{I_2(x, y) + I_4(x, y)} - 1,$$

$$V_2(x, y) = \sin(\delta(x, y))\cos(2\theta(x, y)) = 1 - \frac{2I_3(x, y)}{I_2(x, y) + I_4(x, y)},$$

$$V_3(x, y) = \cos(\delta(x, y)) = \frac{2I_1(x, y)}{I_2(x, y) + I_4(x, y)} - 1,$$

calculating the retardation $\delta(x, y)$ of the matrix unit (x, y) in the range of 0~180°as follows:

when $\sqrt{V_1^2(x, y) + V_2^2(x, y)} \leq V_3(x, y)$, the $\delta(x, y) = \arcsin(\sqrt{V_1^2(x, y) + V_2^2(x, y)})$,

when $\sqrt{V_1^2(x, y) + V_2^2(x, y)} > |V_3(x, y)|$, the $\delta(x, y) = \arccos(V_3(x, y))$,

when $\sqrt{V_1^2(x,y)+V_2^2(x,y)} < -V_3(x,y)$, the $\delta(x,y)=180°-\arcsin(\sqrt{V_1^2(x,y)+V_2^2(x,y)})$,

calculating the fast axis azimuth angle θ(x, y) of the matrix unit (x, y) in the range of -90°~90° as follows:

when $V_2(x, y) < 0$ & $V_1(x, y) \leq 0$, the $\theta(x,y)=\frac{1}{2}\arctan(\frac{V_1(x,y)}{V_2(x,y)})-90°$,

when $V_2(x, y) > 0$, the $\theta(x,y)=\frac{1}{2}\arctan(\frac{V_1(x,y)}{V_2(x,y)})$,

when $V_2(x, y) < 0$ & $V_1(x, y) > 0$, the $\theta(x,y)=\frac{1}{2}\arctan(\frac{V_1(x,y)}{V_2(x,y)})+90°$;

④ sequentially changing the coordinate values x and y of the matrix unit (x, y) and its corresponding intensity values $I_1(x, y)$, $I_2(x, y)$, $I_3(x, y)$ and $I_4(x, y)$ and then repeating step ③ until the entire matrix units of the measuring sample 3 are calculated, to thus obtain its phase retardation distribution and the fast axis azimuth angle distribution.

The principle of this invention is explained as follows:

The Jones Vector E of the circularly polarized light emitted from the circular polarizer can be expressed as

$$E = \frac{E_0}{\sqrt{2}}\begin{bmatrix} 1 \\ i \end{bmatrix}, \qquad (20)$$

wherein $E_0$ is the amplitude of the circularly polarized light. The Jones Matrix $J_S$ of the matrix unit (x, y) of the measuring sample 3 can be expressed as

$$J_s = \begin{bmatrix} \cos\frac{\delta(x,y)}{2} - i\sin\frac{\delta(x,y)}{2}\cos 2\theta(x,y) & -i\sin\frac{\delta(x,y)}{2}\sin 2\theta(x,y) \\ -i\sin\frac{\delta(x,y)}{2}\sin 2\theta(x,y) & \cos\frac{\delta(x,y)}{2} + i\sin\frac{\delta(x,y)}{2}\cos 2\theta(x,y) \end{bmatrix}, \qquad (21)$$

wherein δ(x, y) and θ(x, y) are respectively the phase retardation and the fast axis azimuth angle of the matrix unit (x, y) of the sample 3. The Jones Matrixes $J_P$ of the first analyzer 61, the second analyzer 62, the third analyzer 63 and the forth analyzer 64 all can be expressed as

$$J_P = \begin{bmatrix} \cos^2\alpha & \sin\alpha\cos\alpha \\ \sin\alpha\cos\alpha & \sin^2\alpha \end{bmatrix}, \qquad (22)$$

wherein α is the polarization direction angles of the analyzers. The Jones Matrix $J_Q$ of the quarter wave plate 5 can be expressed as

$$J_Q = \begin{bmatrix} 1 & 0 \\ 0 & i \end{bmatrix}. \qquad (23)$$

After directly analyzed by the second analyzer 62, the third analyzer 63 and the fourth analyzer 64 without passing through the quarter wave plate 5, the Jones Vectors $E_1(x, y)$ of three sub-beams all can be expressed as

$$E_1(x,y) = J_P J_S E . \qquad (24)$$

After passing through the quarter wave plate 5 and then analyzed by the first analyzer 61, the Jones Matrix

$E_2(x, y)$ of one sub-beam can be expressed as

$$\mathbf{E}_2(x, y) = \mathbf{J}_P \mathbf{J}_Q \mathbf{J}_S E \ . \tag{25}$$

When the Jones Matrix $E_1(x, y)$ or $E_2(x, y)$ is multiplied by its conjugate transposed matrix, the intensity values $I_1(x, y)$, $I_2(x, y)$, $I_3(x, y)$, $I_4(x, y)$ of the four sub-beams corresponding to the matrix unit $(x, y)$ of the measuring sample 3 can be expressed as

$$I_1(x, y) = I_0(1 + \cos(\delta(x, y))) \ , \tag{26}$$

$$I_2(x, y) = I_0(1 + \sin(\delta(x, y)) \sin(2\theta(x, y))) \ , \tag{27}$$

$$I_3(x, y) = I_0(1 - \sin(\delta(x, y)) \cos(2\theta(x, y))) \ , \tag{28}$$

$$I_4(x, y) = I_0(1 - \sin(\delta(x, y)) \sin(2\theta(x, y))) \ . \tag{29}$$

From equations (26)~(29), it can be deduced that

$$V_1(x, y) = \sin(\delta(x, y)) \sin(2\theta(x, y)) = \frac{2I_2(x, y)}{I_2(x, y) + I_4(x, y)} - 1 \ , \tag{30}$$

$$V_2(x, y) = \sin(\delta(x, y)) \cos(2\theta(x, y)) = 1 - \frac{2I_3(x, y)}{I_2(x, y) + I_4(x, y)} \ , \tag{31}$$

$$V_3(x, y) = \cos(\delta(x, y)) = \frac{2I_1(x, y)}{I_2(x, y) + I_4(x, y)} - 1 \ . \tag{32}$$

Then when $\sqrt{V_1^2(x, y) + V_2^2(x, y)} \le V_3(x, y)$, the

$$\delta(x, y) = \arcsin(\sqrt{V_1^2(x, y) + V_2^2(x, y)}) \ , \tag{33}$$

when $\sqrt{V_1^2(x, y) + V_2^2(x, y)} > |V_3(x, y)|$, the

$$\delta(x, y) = \arccos(V_3(x, y)) \ , \tag{34}$$

when $\sqrt{V_1^2(x, y) + V_2^2(x, y)} < -V_3(x, y)$, the

$$\delta(x, y) = 180° - \arcsin(\sqrt{V_1^2(x, y) + V_2^2(x, y)}) \ . \tag{35}$$

When $V_2(x, y) < 0$ & $V_1(x, y) \le 0$, the

$$\theta(x, y) = \frac{1}{2} \arctan(\frac{V_1(x,y)}{V_2(x,y)}) - 90°, \qquad (36)$$

when $V_2(x, y) > 0$ , the

$$\theta(x, y) = \frac{1}{2} \arctan(\frac{V_1(x,y)}{V_2(x,y)}), \qquad (37)$$

when $V_2(x, y) < 0$ & $V_1(x, y) > 0$, the

$$\theta(x, y) = \frac{1}{2} \arctan(\frac{V_1(x,y)}{V_2(x,y)}) + 90°. \qquad (38)$$

By using equations (33)~(38), the $\delta(x, y)$ distribution can be measured in the range or 0° ~ 180° and $\theta(x, y)$ distribution can be measured in the range or -90°~90°.

Experiment results show that this invention can measure the phase retardation distribution and fast axis azimuth angle distribution in real time. The measured results are immune to the fluctuation of the initial intensity. Meanwhile this invention is of wide measurement range.

**Claims**

1.  A device for measuring phase retardation distribution and fast axis azimuth angle distribution of a sample (3) in real time, comprising:

    a collimating light source (1), a circular polarizer (2), a diffractive beam-splitting component (4), a quarter wave plate (5), an analyzer array (6), a CCD image sensor (7) and a computer (8) equipped with an image acquisition card;
    wherein the analyzer array (6) is composed of a first analyzer (61), a second analyzer (62), a third analyzer (63) and a fourth analyzer (64), whose polarization direction angle successively increases by 45°; wherein the quarter wave plate (5) is located in a same path as the first analyzer (61) between the diffractive beam-splitting component (4) and the analyzer array (6) and the angle between the fast axis of the quarter wave plate (5) and the transmission direction of the first analyzer (61) is 45° or 135°;
    wherein the system is configured such that in use the light emitted from the collimating light source (1) passes through the circular polarizer (2) and then the diffractive beam-splitting component (4) and is split into four sub-beams by the diffractive beam-splitting component (4), and only one of the sub-beams passes through the quarter wave plate (5) and then is analyzed by the first analyzer (61), and the other three sub-beams are directly analyzed by the second analyzer (62), the third analyzer (63) and the fourth analyzer (64), respectively;
    wherein an output port of the image sensor (7) is connected to an input port of the computer (8); and
    wherein a means for accommodating a measuring sample (3) is arranged between the circular polarizer (2) and the diffractive beam-splitting component (4).

2.  The device of claim 1, wherein the collimating light source (1) is a He-Ne laser.

3.  The device of claim 1 wherein the circular polarizer (2) is made of calcite crystal and quartz crystal, whose extinction ratio is better than $10^{-3}$.

4.  The device claim 1 wherein the diffractive beam-splitting component (4) is a Quadrature Amplitude grating, a Quadrature Phase grating or a Dammann grating, which can split the incident beam into four sub-beams with the same light intensity.

5.  The device of claim 1, wherein the quarter wave plate (5) is a zero-order standard quartz quarter wave plate.

6.  The device of claim 1 wherein the first analyzer (61), the second analyzer (62), the third analyzer (63) and the fourth analyzer (64) are all polarizers having extinction ratio better than $10^{-3}$.

**7.** A method for measuring phase retardation distribution and fast axis azimuth angle distribution in real time of a sample (3) using the device of claim 1, comprising the following steps:

① inserting a measuring sample (3) into the means for accommodating the sample (3), adjusting the light beam so that it perpendicularly passes through the measuring sample (3);

② turning on the collimating light source (1), the CCD image sensor (7) and the computer (8), the CCD image sensor (7) receiving an image formed by the four sub-beams and then transmitting it to the computer (8), the computer (8) dividing the image into four sub-images and pixelating the four sub-images using same pixelation method and establishing a same coordinate system, respectively, the computer further matrixing the measuring sample (3) and establishing a coordinate system which is the same as that of the sub-image, wherein the intensity values in the four sub-images corresponding to the measured matrix unit (x, y) of the measuring sample (3) are $I_1(x, y)$, $I_2(x, y)$, $I_3(x, y)$ and $I_4(x, y)$; by calculating the intensity values obtaining the phase retardation and fast axis azimuth angle of the matrix unit (x, y) of the measuring sample (3); or and obtaining the phase retardation distribution and the fast axis azimuth angle distribution of the measuring sample (3) by processing the four sub-images.

**8.** The method of claim 7, wherein the computer (8) processing the sub-images is adapted to perform the following steps:

when the polarization direction of the first analyzer (61) is 45° relative to the fast axis of the quarter wave plate (5), the computer (8) performs the steps ③, ④ below:

③ the computer (8) processing the intensity values $I_1(x, y)$, $I_2(x, y)$, $I_3(x, y)$ and $I_4(x, y)$ corresponding to the matrix unit (x, y) as follows:

$$V_1(x, y) = \sin(\delta(x, y))\sin(2\theta(x, y)) = \frac{2I_1(x, y)}{I_1(x, y) + I_3(x, y)} - 1 ,$$

$$V_2(x, y) = \sin(\delta(x, y))\cos(2\theta(x, y)) = \frac{2I_4(x, y)}{I_1(x, y) + I_3(x, y)} - 1 ,$$

$$V_3(x, y) = \cos(\delta(x, y)) = 1 - \frac{2I_2(x, y)}{I_1(x, y) + I_3(x, y)} ,$$

wherein $\delta(x, y)$ is the retardation of the matrix unit (x, y), and $\theta(x, y)$ is the fast axis azimuth angle of the matrix unit (x, y),

then calculating the retardation $\delta(x, y)$ in the range of 0°~180° as follows:

when $\sqrt{V_1^2(x, y) + V_2^2(x, y)} \leq V_3(x, y)$, the $\delta(x, y) = \arcsin(\sqrt{V_1^2(x, y) + V_2^2(x, y)})$,

when $\sqrt{V_1^2(x, y) + V_2^2(x, y)} > |V_3(x, y)|$, the $\delta(x, y) = \arccos(V_3(x, y))$,

when $\sqrt{V_1^2(x, y) + V_2^2(x, y)} < -V_3(x, y)$, the $\delta(x, y) = 180° - \arcsin(\sqrt{V_1^2(x, y) + V_2^2(x, y)})$, calculating the fast axis azimuth angle $\theta(x, y)$ in the range of -90°~90° as follows:

when $V_2(x, y) < 0$ & $V_1(x, y) \leq 0$, the $\theta(x, y) = \frac{1}{2}\arctan(\frac{V_1(x, y)}{V_2(x, y)}) - 90°$,

when $V_2(x, y) > 0$, the $\theta(x, y) = \frac{1}{2}\arctan(\frac{V_1(x, y)}{V_2(x, y)})$,

when $V_2(x, y) < 0$ & $V_1(x, y) > 0$, the $\theta(x, y) = \frac{1}{2}\arctan(\frac{V_1(x, y)}{V_2(x, y)}) + 90°$;

④ sequentially changing the coordinate values x and y of the matrix unit (x, y) and its corresponding intensities $I_1(x, y)$, $I_2(x, y)$, $I_3(x, y)$ and $I_4(x, y)$ and then repeating step

③ until the entire matrix units of the measuring sample (3) are calculated, to thus obtain its phase retardation distribution and the fast axis azimuth angle distribution;

when the polarization direction of the first analyzer (61) is 135° relative to the fast axis azimuth angle of the quarter wave plate (5), the computer (8) performs the steps ⑤, ⑥ below:

⑤ the computer (8) processing the intensity values $I_1(x, y)$, $I_2(x, y)$, $I_3(x, y)$ and $I_4(x, y)$ corresponding to said matrix unit (x, y) as follows:

$$V_1(x,y) = \sin(\delta(x,y))\sin(2\theta(x,y)) = \frac{2I_2(x,y)}{I_2(x,y)+I_4(x,y)} - 1 ,$$

$$V_2(x,y) = \sin(\delta(x,y))\cos(2\theta(x,y)) = 1 - \frac{2I_3(x,y)}{I_2(x,y)+I_4(x,y)} ,$$

$$V_3(x,y) = \cos(\delta(x,y)) = \frac{2I_1(x,y)}{I_2(x,y)+I_4(x,y)} - 1 ,$$

then calculating the retardation θ(x, y) in the range of 0°~180° as follows:

when $\sqrt{V_1^2(x,y)+V_2^2(x,y)} \le V_3(x,y)$, the $\delta(x,y) = \arcsin(\sqrt{V_1^2(x,y)+V_2^2(x,y)})$,

when $\sqrt{V_1^2(x,y)+V_2^2(x,y)} > |V_3(x,y)|$, the δ(x,y)=arccos(V_3(x,y)),

when $\sqrt{V_1^2(x,y)+V_2^2(x,y)} < -V_3(x,y)$, the $\delta(x,y) = 180° - \arcsin(\sqrt{V_1^2(x,y)+V_2^2(x,y)})$,

calculating the fast axis azimuth angle θ(x, y) in the range of -90°~90° as follows:

when $V_2(x, y) < 0$ & $V_1(x, y) \le 0$, the $\theta(x,y) = \frac{1}{2}\arctan(\frac{V_1(x,y)}{V_2(x,y)}) - 90°$,

when $V_2(x, y) > 0$, the $\theta(x,y) = \frac{1}{2}\arctan(\frac{V_1(x,y)}{V_2(x,y)})$,

when $V_2(x, y) < 0$ & $V_1(x, y) > 0$, the $\theta(x,y) = \frac{1}{2}\arctan(\frac{V_1(x,y)}{V_2(x,y)}) + 90°$,

⑥ sequentially changing the coordinate values x and y of the matrix unit (x, y) and its corresponding intensities $I_1(x, y)$, $I_2(x, y)$, $I_3(x, y)$ and $I_4(x, y)$ and then repeating step ⑤ until the entire matrix units of the measuring sample (3) are calculated, to thus obtain its phase retardation distribution and the fast axis azimuth angle distribution.

**Patentansprüche**

1. Vorrichtung zur Messung der Phasenverzögerungsverteilung und der schnellen Achsen-Azimutwinkelverteilung einer Messprobe in Echtzeit umfassend:

eine Kollimationslichtquelle (1), einen Zirkularpolarisator (2), eine diffraktive Strahlteilungskomponente (4), eine I/4-Platte (5), eine Analysatoranordnung (6), einen CCD-Bildsensor (7) und einen Rechner (8), der mit einer Bilderfassungskarte ausgestattet ist;
wobei das Analysatorarray (6) aus einem ersten Analysator (61), einem zweiten Analysator (62), einem dritten Analysator (63) und einem vierten Analysator (64) besteht, dessen Polarisationsrichtungswinkel sukzessive um 45° ansteigt;
wobei die I/4-Platte (5) auf ein und demselben Weg wie der erste Analysator (61) zwischen der diffraktiven Strahlteilungskomponente (4) und der Analysatoranordnung (6) vorgesehen ist und der Winkel zwischen der

schnellen Achse der l/4-Platte (5) und der Übertragungsrichtung des ersten Analysators (61) 45° oder 135° ist; wobei das System so konfiguriert ist, dass im Betrieb das von der Kollimationslichtquelle (1) emittierte Licht durch den zirkularen Polarisator (2) und dann die diffraktive Strahlteilungskomponente (4) hindurchtritt und mittels der diffraktiven Strahlteilungskomponente (4) in vier Teilstrahlen aufgeteilt wird und nur einer der Teilstrahlen durch die l/4-Platte (5) hindurchtritt und dann vom ersten Analysator (61) analysiert wird, und die anderen drei Teilstrahlen werden direkt vom zweiten Analysator (62), vom dritten Analysator (63) und vom vierten Analysator (64) analysiert;

wobei ein Ausgangsanschluß des Bildsensors (7) mit einem Eingangsanschluß des Rechners (8) verbunden ist; und

wobei zwischen dem Zirkularpolarisator (2) und der diffraktiven Strahlteilungskomponente (4) Mittel zur Aufnahme einer Messprobe (3) angeordnet sind.

2. Vorrichtung nach Anspruch 1, wobei die Kollimationslichtquelle (1) ein He-Ne-Laser ist.

3. Vorrichtung nach Anspruch 1, wobei der Zirkularpolarisator (2) aus Calcitkristall und Quarzkristall besteht, dessen Extinktionsverhältnis besser als $10^{-3}$ ist.

4. Vorrichtung nach Anspruch 1, wobei die diffraktive Strahlteilungskomponente (4) ein Quadratur-Amplitudengitter, ein Quadratur-Phasengitter oder ein Dammann-Gitter ist, das den einfallenden Strahl in vier Teilstrahlen mit der gleichen Lichtintensität aufteilen kann.

5. Vorrichtung nach Anspruch 1, wobei die l/4-Platte (5) eine Quarz-l/4-Platte nullter Ordnung ist.

6. Vorrichtung nach Anspruch 1, wobei der erste Analysator (61), der zweite Analysator (62), der dritte Analysator (63) und der vierte Analysator (64) Polarisatoren mit einem Extinktionsverhältnis von besser als $10^{-3}$ sind.

7. Verfahren zur Messung der Phasenverzögerungsverteilung und der schnellen Achsen-Azimutwinkelverteilung einer Messprobe (3) in Echtzeit unter Verwendung der Vorrichtung gemäß Anspruch 1, umfassen die folgenden Schritte:

1: Eingabe einer Messprobe (3) in die Mittel zum Speichern der Messprobe (3), Einstellen des Lichtstrahls, so dass dieser senkrecht durch die Meßprobe (3) hindurchtritt;

2: Einschalten der Kollimationslichtquelle (1), des CCD-Bildsensors (7) und des Rechners (8), wobei der CCD-Bildsensor (7) ein von den vier Teilstrahlen gebildetes Bild empfängt und dieses dann an den Rechner (8) überträgt, wobei der Rechner (8) das Bild in vier Teilbilder trennt und die vier Teilbilder unter Verwendung des gleichen Pixelbetriebs pixelt und jeweils ein gleiches Koordinatensystem aufbaut, wobei der Rechner die Messprobe (3) weiter matriziert und ein Koordinatensystem festlegt, welches das gleiche wie das Koordinatensystem des Teilbildes ist, wobei die Intensitätswerte in den vier Teilbildern, welche der Messmatrixeinheit (x, y) der Messprobe (3) entsprechen, $I_1(x, y)$, $I_2(x, y)$, $I_3(x, y)$ und $I_4(x, y)$ sind; durch Berechnung der Intensitätswerte werden die Phasenverzögerung und der schnelle Achsen-Azimutwinkel der Matrixeinheit (x, y) der Messprobe (3) ermittelt; und die Phasenverzögerungsverteilung und die schnelle Achsen-Azimutwinkelverteilung der Messprobe (3) werden durch Verarbeiten der vier Teilbilder ermittelt.

8. Verfahren nach Anspruch 7, wobei der Rechner (8), der die Teilbilder verarbeitet, dazu konfiguriert ist, die folgenden Schritte auszuführen:

wenn die Polarisationsrichtung des ersten Analysators (61) gegenüber der schnellen Achse der l/4-Platte (5) 45° beträgt, führt der Rechner (8) die Schritte 3, 4 aus:

3: Der Rechner (8) verarbeitet die Intensitätswerte $I_1(x, y)$, $I_2(x, y)$, $I_3(x, y)$ und $I_4(x, y)$ entsprechend der Matrixeinheit (x, y) wie folgt:

$$V_1(x, y) = \sin(\delta(x, y))\sin(2\theta(x, y)) = \frac{2I_1(x, y)}{I_1(x, y) + I_3(x, y)} - 1 \, ,$$

$$V_2(x, y) = \sin(\delta(x, y))\cos(2\theta(x, y)) = \frac{2I_4(x, y)}{I_1(x, y) + I_3(x, y)} - 1 \, ,$$

$$V_3(x,y) = \cos(\delta(x,y)) = 1 - \frac{2I_2(x,y)}{I_1(x,y) + I_3(x,y)},$$

wobei $\delta(x, y)$ die Verzögerung der Matrixeinheit (x, y) ist und $\theta(x, y)$ der schnelle Achsenwinkel der Matrixeinheit (x, y) ist und dann findet die Berechnung der Verzögerung $\delta(x, y)$ im Bereich von 0°~ 180° wie folgt statt:

wenn $\sqrt{V_1^2(x,y) + V_2^2(x,y)} \leq V_3(x,y)$, ist der $\delta(x,y) = \arcsin(\sqrt{V_1^2(x,y) + V_2^2(x,y)})$,

wenn $\sqrt{V_1^2(x,y) + V_2^2(x,y)} > |V_3(x,y)|$, ist der $\delta(x,y) = \arccos(V_3(x,y))$,

wenn $\sqrt{V_1^2(x,y) + V_2^2(x,y)} < -V_3(x,y)$, ist der $\delta(x,y) = 180° - \arcsin(\sqrt{V_1^2(x,y) + V_2^2(x,y)})$,

Berechnen des schnellen Achsen-Azimutwinkels $\theta(x, y)$ im Bereich von -90° ~ 90° findet wie folgt statt:

wenn $V_2(x, y) < 0$ & $V_1(x, y) \leq 0$, ist der $\theta(x,y) = \frac{1}{2}\arctan(\frac{V_1(x,y)}{V_2(x,y)}) - 90°$,

wenn $V_2(x, y) > 0$, ist der $\theta(x,y) = \frac{1}{2}\arctan(\frac{V_1(x,y)}{V_2(x,y)})$,

wenn $V_2(x, y) < 0$ & $V_1(x, y) > 0$, ist der $\theta(x,y) = \frac{1}{2}\arctan(\frac{V_1(x,y)}{V_2(x,y)}) + 90°$;

4: sequentielles Ändern der Koordinatenwerte x und y der Matrixeinheit (x, y) und deren entsprechende Intensitäten $I_1(x, y)$, $I_2(x, y)$, $I_3(x, y)$ und $I_4(x, y)$ und daraufhin Wiederholen des Schritts 3, bis die gesamten Matrixeinheiten der Meßprobe (3) berechnet sind, um so deren Phasenverzögerungsverteilung und die schnelle Achsen-Azimutwinkelverteilung zu erhalten;

wenn die Polarisationsrichtung des ersten Analysators (61) relativ zum schnellen Achsen-Azimutwinkels der l/4-Platte (5) 135° beträgt, führt der Rechner (8) die folgenden Schritte 5, 6 aus, wie folgt:

5: die Verarbeitung der Intensitätswerte $I_1(x, y)$, $I_2(x, y)$, $I_3(x, y)$ und $I_4(x, y)$, die der Matrixeinheit (x, y) entsprechen, durch den Rechner (8) ist wie folgt:

$$V_1(x,y) = \sin(\delta(x,y))\sin(2\theta(x,y)) = \frac{2I_2(x,y)}{I_2(x,y) + I_4(x,y)} - 1,$$

$$V_2(x,y) = \sin(\delta(x,y))\cos(2\theta(x,y)) = 1 - \frac{2I_3(x,y)}{I_2(x,y) + I_4(x,y)},$$

$$V_3(x,y) = \cos(\delta(x,y)) = \frac{2I_1(x,y)}{I_2(x,y) + I_4(x,y)} - 1,$$

dann wird die Verzögerung $\delta(x, y)$ im Bereich von 0° ~ 180° wie folgt berechnet:

wenn $\sqrt{V_1^2(x,y) + V_2^2(x,y)} \leq V_3(x,y)$, $\delta(x,y) = \arcsin(\sqrt{V_1^2(x,y) + V_2^2(x,y)})$,

wenn $\sqrt{V_1^2(x,y) + V_2^2(x,y)} > |V_3(x,y)|$, $\delta(x,y) = \arccos(V_3(x,y))$,

wenn $\sqrt{V_1^2(x,y) + V_2^2(x,y)} < -V_3(x,y)$, $\delta(x,y) = 180° - \arcsin(\sqrt{V_1^2(x,y) + V_2^2(x,y)})$,

Berechnen des schnellen Achsen-Azimutwinkels $\theta(x, y)$ im Bereich von -90° ~ 90° wie folgt:

wenn $V_2(x, y) < 0$ & $V_1(x, y) \leq 0$, dann ist $\theta(x,y) = \frac{1}{2}\arctan(\frac{V_1(x,y)}{V_2(x,y)}) - 90°$,

$$\text{wenn } V_2(x, y) > 0, \text{ dann ist } \theta(x, y) = \frac{1}{2}\arctan\left(\frac{V_1(x, y)}{V_2(x, y)}\right),$$

$$\text{wenn } V_2(x, y) < 0 \ \& \ V_1(x, y) > 0, \text{ dann ist } \theta(x, y) = \frac{1}{2}\arctan\left(\frac{V_1(x, y)}{V_2(x, y)}\right) + 90°,$$

6: sequentielles Ändern der Koordinatenwerte x und y der Matrixeinheit (x, y) und deren entsprechenden Intensitäten $I_1(x, y)$, $I_2(x, y)$, $I_3(x, y)$ und $I_4(x, y)$ und dann wiederholen des Schrittes 5, bis die gesamten Matrixeinheiten der Meßprobe (3) berechnet sind, um so die Phasenverzögerungsverteilung und die schnelle Achsen-Azimutwinkelverteilung zu erhalten.

**Revendications**

1. Un dispositif destiné à la mesure de la répartition de retard de phase et de la répartition de l'angle d'azimut de l'axe rapide en temps réel. **caractérisé en ce que** le dispositif comprend une source lumineuse collimatée (1), un polariseur circulaire (2), un composant de division de faisceau de diffraction (4), une lame quart d'onde (5), un réseau d'analyseurs (6), un capteur d'image à CCD (7) et (8) un ordinateur équipé d'une carte de capture d'image ;
dans lequel le réseau d'analyseurs (6) se compose d'un premier analyseur (61), d'un deuxième analyseur (62), d'un troisième analyseur (63) et d'un quatrième analyseur (64), dont l'angle de direction de polarisation augmente successivement par 45° ; dans lequel la lame quart d'onde (5) se trouve dans un même chemin que le premier analyseur (61) et l'angle entre l'axe rapide de la lame quart d'onde (5) et la direction de transmission du premier analyseur (61) est de 45° ou de 135°;
dans lequel la lumière émise à partir de la source lumineuse collimatée (1) passe à travers le polariseur circulaire (2) et ensuite à travers le composant de division de faisceau de diffraction (4) et est divisée en quatre sous-faisceaux par le composant de division de faisceau de diffraction (4), dans lequel l'un des sous-faisceaux passe à travers la lame quart d'onde (5) et est alors analysé par le premier analyseur (61) et les trois autres sous-faisceaux sont analysés directement par le deuxième analyseur (62), le troisième analyseur (63) et le quatrième analyseur (64) respectivement ; dans lequel un port de sortie du capteur d'image (7) est connecté à un port d'entrée de l'ordinateur (8) ; et
dans lequel un robinet destiné à s'adapter à un échantillon de mesure (3) est disposé entre le polariseur circulaire (2) et le composant de division de faisceau de diffraction (4).

2. Le dispositif de la revendication 1, **caractérisé en ce que** la source lumineuse collimatée (1) est un laser He-Ne.

3. Le dispositif de la revendication 1, **caractérisé en ce que** le polariseur circulaire (2) est fabriqué à partir de cristal de calcite et de cristal de quartz, dont le rapport d'extinction est meilleur que $10^{-3}$.

4. Le dispositif de la revendication 1, **caractérisé en ce que** le composant de division de faisceau de diffraction (4) est un réseau d'amplitude en quadrature, un réseau de phase en quadrature ou un réseau de Dammann, qui peut diviser le faisceau incident en quatre sous-faisceaux comportant la même intensité lumineuse.

5. Le dispositif de la revendication 1, **caractérisé en ce que** la lame quart d'onde (5) est une lame quart d'onde en quartz standard d'ordre zéro.

6. Le dispositif de la revendication 1, **caractérisé en ce que** le premier analyseur (61), le deuxième analyseur (62), le troisième analyseur (63) et le quatrième analyseur (64) sont tous des polariseurs présentant un rapport d'extinction meilleur que $10^{-3}$.

7. Un procédé d'utilisation du dispositif de la revendication 1 destiné à la mesure d'une répartition de retard de phase et d'une répartition de l'angle d'azimut de l'axe rapide en temps réel, **caractérisé en ce qu'**il comprend les étapes suivantes consistant à :

insérer un échantillon de mesure (3) dans le robinet entre le polariseur circulaire (2) et le composant de division de faisceau de diffraction (4), ajuster le faisceau lumineux afin qu'il passe perpendiculairement à travers l'échantillon de mesure (3) ;

allumer la source lumineuse collimatée (1), le capteur d'image à CCD (7) et l'ordinateur (8), le capteur d'image à CCD (7) recevant une image formée par les quatre sous-faisceaux et la transmettant alors à l'ordinateur (8), l'ordinateur (8) séparant l'image en quatre sous-images et pixélisant les quatre sous-images à l'aide du même procédé de pixélisation et établissant un même système de coordonnées, respectivement, l'ordinateur réalisant en outre une matrice de l'échantillon de mesure (3) et établissant un système de coordonnées qui est le même que celui de la sous-image, dans lequel les valeurs d'intensité dans les quatre sous-images correspondant à l'unité de matrice mesurée (x, y) de l'échantillon de mesure (3) sont $I_1$(x, y), I2 (x, y), $I_3$(x, y) et $I_4$(x, y); en calculant les valeurs d'intensité , le retard de phase et l'angle d'azimut de l'axe rapide de l'unité de matrice (x, y) de l'échantillon de mesure (3) sont obtenus. De sorte que la répartition de retard de phase et la répartition de l'angle d'azimut de l'axe rapide de l'échantillon de mesure (3) puissent être obtenues par le traitement des quatre sous-images.

8. Le procédé de la revendication 7, **caractérisé en ce que** l'ordinateur (8) traite les sous-images contient les étapes suivantes :

lorsque la direction de polarisation du premier analyseur (61) est de 45° par rapport à l'axe rapide de la lame quart d'onde (5), l'ordinateur (8) effectue les étapes ③, ④ ci-dessous :

③ l'ordinateur (8) traite les valeurs d'intensité $I_1$(x, y), $I_2$(x, y), $I_3$(x, y) et $I_4$(x, y) correspondant à l'unité de matrice (x, y) comme suit :

$$V_1(x, y) = \sin(\delta(x, y))\sin(2\theta(x, y)) = \frac{2I_1(x, y)}{I_1(x, y) + I_3(x, y)} - 1 ,$$

$$V_2(x, y) = \sin(\delta(x, y))\cos(2\theta(x, y)) = \frac{2I_4(x, y)}{I_1(x, y) + I_3(x, y)} - 1 ,$$

$$V_3(x, y) = \cos(\delta(x, y)) = 1 - \frac{2I_2(x, y)}{I_1(x, y) + I_3(x, y)} ,$$

dans laquelle $\delta$(x, y) est le retard de l'unité de matrice (x, y), et $\theta$(x, y) est l'angle d'azimut de l'axe rapide de l'unité de matrice (x, y),
ensuite, calcule le retard $\delta$(x, y) dans la plage de 0°~180° comme suit :

lorsque $\sqrt{V_1^2(x, y) + V_2^2(x, y)} \leq V_3(x, y)$, $\delta(x, y) = \arcsin(\sqrt{V_1^2(x, y) + V_2^2(x, y)})$ ,

lorsque $\sqrt{V_1^2(x, y) + V_2^2(x, y)} > \left| V_3(x, y) \right|$, $\delta(x, y) = \arccos(V_3(x, y))$,

lorsque $\sqrt{V_1^2(x, y) + V_2^2(x, y)} < -V_3(x, y)$, $\delta(x, y) = 180° - \arcsin(\sqrt{V_1^2(x, y) + V_2^2(x, y)})$ ,

Calcule l'angle d'azimut de l'axe rapide $\theta$(x, y) dans la plage de -90°~90° comme suit :

lorsque $V_2$(x, y) < 0 & $V_1$(x, y) $\leq$ 0, $\theta(x, y) = \frac{1}{2}\arctan(\frac{V_1(x, y)}{V_2(x, y)}) - 90°$ ,

lorsque $V_2(x, y) > 0$, $\theta(x, y) = \frac{1}{2}\arctan(\frac{V_1(x, y)}{V_2(x, y)})$ ,

lorsque $V_2$(x, y) < 0 & $V_1$(x, y) > 0, le $\theta(x, y) = \frac{1}{2}\arctan(\frac{V_1(x, y)}{V_2(x, y)}) + 90°$ ;

④ change séquentiellement les valeurs des coordonnées x et y de l'unité de matrice (x, y) et ses intensités correspondantes $I_1$(x, y), $I_2$(x, y), $I_3$(x, y) et $I_4$(x, y) et alors, répète l'étape ③ jusqu'à ce que toutes les unités de matrice de l'échantillon de mesure (3) soient calculées, ce qui permet ainsi d'obtenir sa répartition de retard de phase et la répartition de l'angle d'azimut de l'axe rapide ;

lorsque la direction de la polarisation du premier analyseur (61) est de 135° par rapport à l'angle d'azimut de l'axe rapide de la lame quart d'onde (5), (8) l'ordinateur effectue les étapes ⑤, ⑥ ci-dessous :

⑤ l'ordinateur (8) traite les valeurs d'intensité I1(x, y), $I_2(x, y)$, $I_3(x, y)$ et $I_4(x, y)$ correspondantes à ladite unité de matrice (x, y) comme suit :

$$V_1(x, y) = \sin(\delta(x, y))\sin(2\theta(x, y)) = \frac{2I_2(x, y)}{I_2(x, y) + I_4(x, y)} - 1 ,$$

$$V_2(x, y) = \sin(\delta(x, y))\cos(2\theta(x, y)) = 1 - \frac{2I_3(x, y)}{I_2(x, y) + I_4(x, y)} ,$$

$$V_3(x, y) = \cos(\delta(x, y)) = \frac{2I_1(x, y)}{I_2(x, y) + I_4(x, y)} - 1 ,$$

ensuite, calcule le retard δ(x, y) dans la plage de 0°~180° comme suit :

lorsque $\sqrt{V_1^2(x, y) + V_2^2(x, y)} \leq V_3(x, y)$, $\delta(x, y) = \arcsin(\sqrt{V_1^2(x, y) + V_2^2(x, y)})$,

lorsque $\sqrt{V_1^2(x, y) + V_2^2(x, y)} > |V_3(x, y)|$, $\delta(x, y) = \arccos(V_3(x, y))$,

lorsque $\sqrt{V_1^2(x, y) + V_2^2(x, y)} < -V_3(x, y)$, $\delta(x, y) = 180° - \arcsin(\sqrt{V_1^2(x, y) + V_2^2(x, y)})$,

Calcule l'angle d'azimut de l'axe rapide θ(x, y) dans la plage de -90°~90° comme suit :

lorsque $V_2(x, y) < 0$ & $V_1(x, y) \leq 0$, $\theta(x, y) = \frac{1}{2}\arctan(\frac{V_1(x, y)}{V_2(x, y)}) - 90°$,

lorsque $V_2(x, y) > 0$, $\theta(x, y) = \frac{1}{2}\arctan(\frac{V_1(x, y)}{V_2(x, y)})$,

lorsque $V_2(x, y) < 0$ & $V_1(x, y) > 0$, $\theta(x, y) = \frac{1}{2}\arctan(\frac{V_1(x, y)}{V_2(x, y)}) + 90°$,

⑥ change séquentiellement les valeurs des coordonnées x et y de l'unité de matrice (x, y) et ses intensités correspondantes $I_1(x, y)$, $I_2(x, y)$, $I_3(x, y)$ et $I_4(x, y)$ et alors, répéte l'étape ⑤ jusqu'à ce que toutes les unités de matrice de l'échantillon de mesure (3) soient calculées, ce qui permet ainsi d'obtenir sa répartition de retard de phase et la répartition de l'angle d'azimut de l'axe rapide.

FIG. 1

FIG. 2

**EP 2 863 200 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200710178950

### Non-patent literature cited in the description

- **TSUNG-CHIH YU et al.** Full-field and full-range sequential measurement of the slow axis angle and phase retardation of linear birefringent materials. *Applied Optics,* 2009, vol. 48, 4568

- Real-time stress induced birefringence measurements of fibrous materials. **PENGQIAN YANG et al.** CONFERENCE ON LASERS AND ELECTRO-OPTICS. CLEO-PACIFIC RIM 2009, 2009